# EUROPÄISCHE PATENTSCHRIFT

(11) **EP 1 108 906 B1**
(45) Veröffentlichungstag und Bekanntmachung des Hinweises auf die Patenterteilung: **29.09.2004**
(21) Anmeldenummer: 00126355.7
(22) Anmeldetag: 02.12.2000
(51) Int. Cl.: F16C 29/04

(54) **Linearführungseinheit**
LINEAR GUIDING DEVICE
DISPOSITIF DE GUIDE LINEAIRE

(30) Priorität: 17.12.1999 DE 19960940
(43) Veröffentlichungstag der Anmeldung: 20.06.2001
(73) Patentinhaber: INA-Schaeffler KG, 91074 Herzogenaurach (DE)
(72) Erfinder: Alber, Eberhard, 71272 Renningen (DE)

(56) Entgegenhaltungen:
- EP-A- 0 340 751
- DE-A- 19 532 759
- DE-U- 8 909 120
- GB-A- 2 095 141
- US-A- 4 541 293
- US-A- 5 711 611
- US-A- 5 735 214

## Beschreibung

### Gebiet der Erfindung

Die Erfindung betrifft eine Linearführungseinheit mit einem Führungsgehäuse, welches in der Form eines Profilträgers mit einer Bodenwand und einer Seitenwand ausgebildet ist, wobei die Wände einen Führungshohlraum begrenzen und im Querschnitt miteinander einen Winkel bilden, der kleiner als 180° ist, und mit einer an der Bodenwand oder an der Seitenwand befestigten Führungsschiene, die von wenigstens einem daran abgestützten und längsverschieblichen Läufer teilweise umgeben ist, an welchem eine zur offenen Seite des Profilträgers herausragende Schlittenplatte befestigt ist, die eine Anschlussfläche für die Verbindung mit einem in Längsrichtung des Führungsgehäuses zu bewegenden Anschlussbauteil aufweist.

### Hintergrund der Erfindung

Aus dem Dokument EP 0 340 751 B1 ist eine solche Linearführungseinheit bekannt. Dort ist der Führungshohlraum von einem Profilträger gebildet, von dessen Bodenplatte zwei parallele Seitenwände aufragen, an deren oberen Enden die Längsöffnung für eine als Verbindungskörper bezeichnete Schlittenplatte angeordnet ist. Daher weist diese Anordnung eine schlechte Zugänglichkeit zu der Führungsschiene und dem daran entlang bewegbaren Läufer im geschlossenen Führungshohlraum auf, was sich im Servicefall nachteilig auswirkt.

### Zusammenfassung der Erfindung

Der Erfindung liegt die Aufgabe zu Grunde, eine Linearführungseinheit zu schaffen, die sich leicht warten lässt. Im Servicefall sollen die Führungsschiene und der Läufer in einfacher Weise freigelegt werden können.

Diese Aufgabe wird erfindungsgemäß dadurch gelöst, dass zur weiteren Begrenzung des Führungshohlraums ein Abdeckblech an der Seitenwand in deren von der Bodenwand abgewandtem Endbereich lösbar befestigt ist, wobei die Längsöffnung für die Schlittenplatte zwischen einem freien Endbereich des Abdeckblechs und der Bodenwand angeordnet ist. Durch die Verwendung des Abdeckblechs ergibt sich ein wirksamer Verschluss des Führungshohlraums nach außen. Eine Demontage des Abdeckblechs ist jederzeit leicht möglich, so dass der Innenraum des Führungsgehäuses und die darin angeordnete Führungsschiene sowie die weiteren Teile dieses Linearlagers besichtigt und gewartet werden können, ohne die gesamte Linearführung zerlegen zu müssen.

Die Bodenwand und die Seitenwand des Profilträgers können im Querschnitt einen Winkel von 90° miteinander bilden. Der Profilträger kann beispielsweise ein Aluminium-Stangpressprofil sein oder aus Stahl oder Kunststoff bestehen. Die Führungsschiene kann an der Bodenwand oder an der Seitenwand befestigt sein.

An dem Führungsgehäuse kann innerhalb des Führungshohlraums eine zu der Führungsschiene parallele Zahnstange befestigt sein, in welche ein mit einer Antriebswelle versehenes Zahnritzel eingreift, welches an der von dem Läufer und der Schlittenplatte gebildeten Läuferbaugruppe drehbar gelagert ist. Dabei können das Zahnritzel und die Antriebswelle in einem an der Schlittenplatte befestigten Lagerbock drehbar gelagert sein.

An der Schlittenplatte kann ein flexibles Zugmittel angreifen, welches über jeweils eine an den Längsenden des Führungsgehäuses angeordnete und dort gelagerten Umlenkrolle geführt ist, wobei die Umlenkrolle mit einer koaxialen Abtriebswelle fest verbunden ist. Die Lagerung der Umlenkrolle kann in einem Umlenkgehäuse erfolgen.

Der Läufer kann an der Führungsschiene entweder gleitend oder über Wälzkörper gelagert sein. Die Zahnstange kann mit der Führungsschiene an der selben Wand (Bodenwand oder Seitenwand) des Führungsgehäuses befestigt sein. Dabei können die Führungsschiene und die Zahnstange auch eine Einheit bilden. Es ist aber auch möglich, an einer der beiden Wände nur die Zahnstange und an der anderen Wand nur die Führungsschiene anzubringen. Mit Hilfe der Zahnstange und der Antriebswelle mit dem Zahnritzel lässt sich also der Läufer längs der Führungsschiene bewegen. Hierfür ist ein flexibles Zugmittel nicht erforderlich.

Die Führungsschiene und/oder die Zahnstange können bzw. kann in einer Nut oder gegen eine Anschlagkante des Profilträgers anliegend montiert sein und durch geeignete Befestigungselemente, beispielsweise Schrauben und/oder Formschluß, Kraftschluß oder Klebeverbindung gegen Abheben gesichert sein. In entsprechender Weise kann auch die Zahnstange montiert sein.

An der Schlittenplatte können auch zwei Läufer befestigt sein, welche die Führungsschiene teilweise umgeben und an dieser in Längsrichtung hintereinander angeordnet sind. Die beiden Läufer können in einem Abstand voneinander an der Schlittenplatte angeordnet sein. Durch die Verwendung eines zweiten Läufers ergibt sich eine größere Übertragungsfähigkeit der auftretenden Kräfte und Momente an der Linearführungseinheit.

Für die Lagerung des Zahnritzels und der Antriebswelle in dem Lagerbock bieten sich Wälzlager an. Es ist aber auch möglich, hier Gleitlager vorzusehen.

Die Verwendung eines flexiblen Zugmittels ermöglicht es, eine Abtriebswelle synchron zur Linearbewegung der Schlittenplatte anzutreiben. Das flexible Zugmittel, über welches die Abtriebswelle angetrieben wird, kann zugleich Teil der Abdeckung des Führungsgehäuses sein und dessen Längsöffnung dort, wo sich der Lagerbock nicht befindet, verschließen. Als flexibles Zugmittel kann beispielsweise ein Riemen, ein Zahnriemen oder ein Band verwendet werden. Es ist mit der Schlittenplatte der Läuferbaugruppe fest verbunden und über je eine Umlenkrolle im Bereich der beiden Enden des Führungsgehäuses geführt.

Die Führungsschiene kann mit Schrauben an dem als Profilträger ausgebildeten Führungsgehäuse befestigt sein. Der genaue Befestigungsort des flexiblen Zugmittels an der Schlittenplatte kann in Längsrichtung des Führungsgehäuses verstellbar sein, so dass damit die auf das flexible Zugmittel aufgebrachte Vorspannung einstellbar ist. Wenn das flexible Zugmittel Teil der Abdeckung ist und die Längsöffnung des Führungsgehäuses mit verschließt und abdichtet, so wird dadurch auch ein Schutz gegen den Austritt von Schmierstoff aus dem Führungsgehäuse geschaffen. Das flexible Zugmittel wird auch dann als Teil der Abdeckung des Führungsgehäuses genutzt, wenn an der Linearführungseinheit eine Abtriebswelle nicht vorgesehen bzw. ausgeführt wird.

### Kurze Beschreibung der Zeichnung

Ein Ausführungsbeispiel der Erfindung ist in der Zeichnung dargestellt und wird im folgenden näher beschrieben. Es zeigen:
- Figur 1: eine erfindungsgemäße Linearführungseinheit in einer Draufsicht mit teilweisem Schnitt;
- Figur 2: eine Seitenansicht der Linearführungseinheit mit teilweisem Schnitt;
- Figur 3: einen Querschnitt durch die Linearführungseinheit gemäß Linie III-III der Figur 2;
- Figur 4: einen Querschnitt durch die Linearführungseinheit gemäß Linie IV-IV der Figur 2;
- Figur 5: einen Querschnitt durch die Linearführungseinheit gemäß Linie V-V der Figur 2.

### Ausführliche Beschreibung der Zeichnung

Die erfindungsgemäße Linearführungseinheit enthält ein Führungsgehäuse 1, welches als langgestreckter Profilkörper mit einer Bodenwand 2 und einer Seitenwand 3 ausgeführt ist. Die Bodenwand 2 und die Seitenwand 3 bilden einen rechten Winkel, so dass sich ein von ihnen begrenzter Führungshohlraum 4 ergibt. Dieser ist mittels eines winkelförmigen Abdeckblechs 5 verschlossen, welches an dem oberen Ende der Seitenwand 3 angrenzt und hier lösbar befestigt ist.

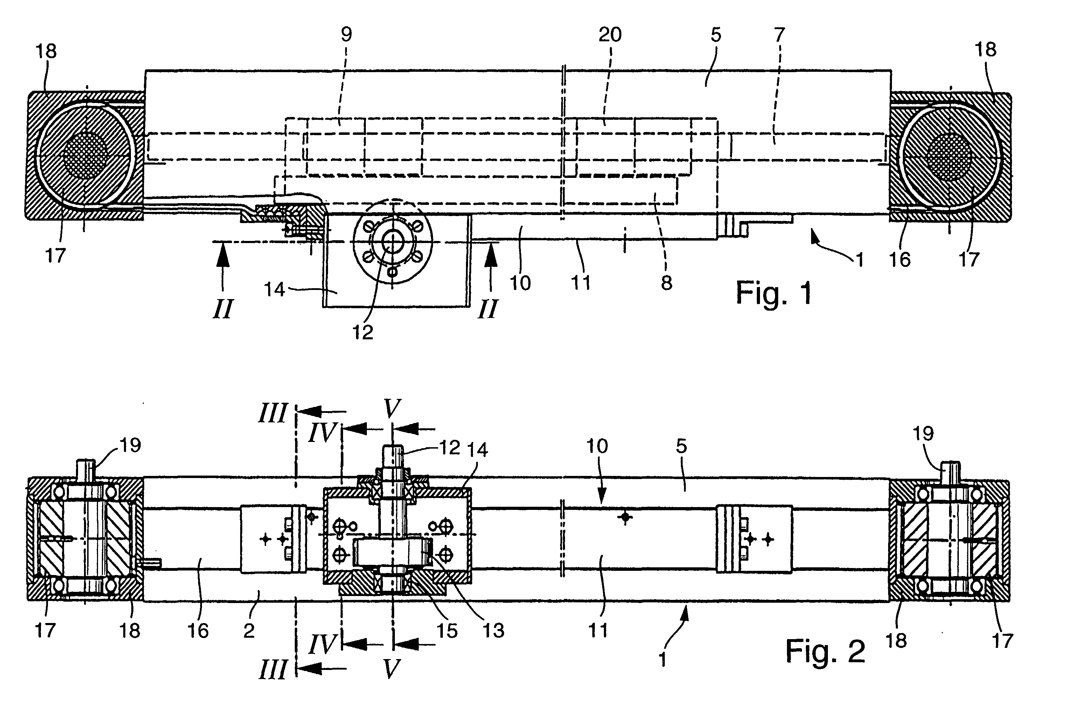

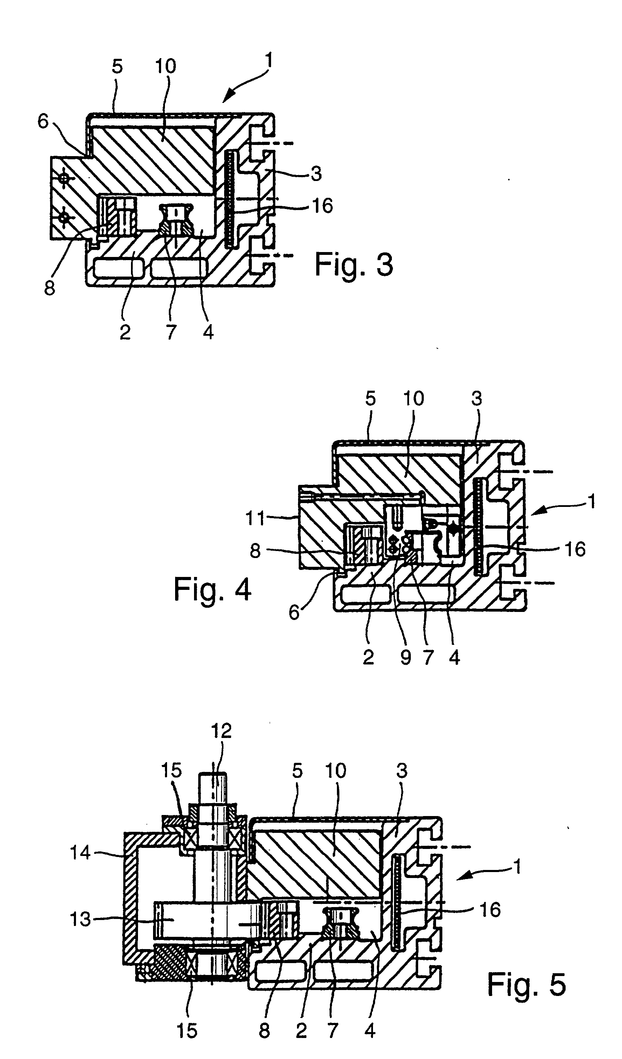

Zwischen dem von der Seitenwand 3 abgewandten Ende der Bodenwand 2 und dem freien Ende des Abdeckblechs 5 ist eine Längsöffnung 6 angeordnet. Innerhalb des Führungshohlraumes 4 ist eine Führungsschiene 7 montiert, die sich parallel zur Seitenwand 3 in Längsrichtung des Führungsgehäuses 1 erstreckt. Die Führungsschiene 7 ist mit Schrauben an der Bodenwand 2 befestigt. Außerdem ist innerhalb des Führungshohlraumes 4 parallel zu der Führungsschiene 7 eine Zahnstange 8 mit Schrauben an der Bodenwand 2 befestigt. Ein Läufer 9, welcher in Figur 1 angedeutet und aus Figur 4 erkennbar, jedoch nicht in den Figuren 3 und 5 dargestellt ist, umgibt die Führungsschiene 7 teilweise und ist an dieser über Wälzkörper abgestützt, so dass er längs der Führungsschiene 7 verschoben werden kann. Die Wälzkörper sind in dem Läufer in mehreren endlosen Umläufen angeordnet. Der Läufer 9 trägt eine Schlittenplatte 10, die durch die Längsöffnung 6 des Führungshohlraumes 4 nach außen ragt und hier eine Anschlußfläche 11 aufweist. An dieser Fläche kann ein Anschlußbauteil, welches längs der Führungsschiene 7 bewegt werden soll, montiert werden. Es wird dann von der Läufereinheit bewegt, die aus dem Läufer 9 und der Schlittenplatte 10 besteht.

Für die Bewegung weist die Läufereinheit einen Antrieb mit einer Antriebswelle 12 und einem daran befestigten Zahnritzel 13 auf. Das Zahnritzel 13 greift in die Zahnstange 8 ein. Die Antriebswelle 12 ist mit dem Zahnritzel 13 in einem Lagerbock 14 über zwei als Wälzlager ausgebildete Ritzellager 15 drehbar gelagert. Der Lagerbock 14 grenzt an der Bodenwand 2 und dem Abdeckblech 5 des Führungsgehäuses 1 an einer Längsseite an, hält jedoch einen geringen Abstand von dem Führungsgehäuse 1 ein. Er ist an der Schlittenplatte 10 befestigt. Wenn auf die Antriebwelle 12 ein Antriebsmoment übertragen wird, erfolgt eine Drehung des Zahnritzels 13 innerhalb des Lagerbockes 14 und damit die Bewegung des Lagerbockes 14 längs der Zahnstange 8, in welcher das Zahnritzel 13 eingreift. Mit der Bewegung des Lagerbockes 14 bewegen sich auch die Schlittenplatte 10 und der daran befestigte Läufer 9, die an der Führungsschiene 7 geführt sind.

Die Linearführungseinheit weist zusätzlich ein flexibles Zugmittel 16 auf, welches beispielsweise als Band, Riemen, Zahnriemen oder Kette ausgeführt sein kann. Dieses flexible Zugmittel 16 ist mit seinen beiden Enden an der Schlittenplatte 10 befestigt und um zwei Umlenkrollen 17 geführt, die an den beiden Längsenden des Führungsgehäuses 1 in Umlenkgehäusen 18 drehbar gelagert sind. Jede Umlenkrolle 17 ist koaxial zu einer Abtriebwelle 19 angeordnet und an dieser befestigt. Mit der Bewegung der Läufereinheit und des Lagerbockes 14 erfolgt daher über das flexible Zugmittel 16 eine Drehung der beiden Abtriebswellen 19.

Wie aus Figur 1 erkennbar ist, sind an der Linearführungseinheit zwei Läufer vorgesehen, die in einem Abstand hintereinander an der Führungsschiene 7 gelagert sind. Zusätzlich zu dem dem Lagerbock 14 nahen Läufer 9 befindet sich an der Führungsschiene 7 ein weiterer, von dem Lagerbock 14 entfernter Läufer 20.

### Bezugszahlenliste

- 1: Führungsgehäuse
- 2: Bodenwand
- 3: Seitenwand
- 4: Führungshohlraum
- 5: Abdeckblech
- 6: Längsöffnung
- 7: Führungsschiene
- 8: Zahnstange
- 9: Läufer
- 10: Schlittenplatte
- 11: Anschlußfläche
- 12: Antriebswelle
- 13: Zahnritzel
- 14: Lagerbock
- 15: Ritzellager
- 16: flexibles Zugmittel
- 17: Umlenkrolle
- 18: Umlenkgehäuse
- 19: Abtriebswelle
- 20: Läufer

## Patentansprüche

1. Linearführungseinheit mit einem Führungsgehäuse (1), welches in der Form eines Profilträgers mit einer Bodenwand (2) und einer Seitenwand (3) ausgebildet ist, wobei die Wände (2, 3) einen Führungshohlraum (4) begrenzen und im Querschnitt miteinander einen Winkel bilden, der kleiner als 180° ist, und mit einer an der Bodenwand (2) oder an der Seitenwand (3) befestigten Führungsschiene (7), die von wenigstens einem daran abgestützten und längsverschieblichen Läufer (9) teilweise umgeben ist, an welchem eine durch eine Längsöffnung (6) des Führungshohlraums (4) herausragende Schlittenplatte (10) befestigt ist, die eine Anschlußfläche (11) für die Verbindung mit einem in Längsrichtung des Führungsgehäuses (1) zu bewegenden Anschlußbauteil aufweist, **dadurch gekennzeichnet, dass** zur weiteren Begrenzung des Führungshohlraums (4) ein Abdeckblech (5) an der Seitenwand (3) in deren von der Bodenwand (2) abgewandtem Endbereich lösbar befestigt ist, wobei die Längsöffnung (6) für die Schlittenplatte (10) zwischen einem freien Endbereich des Abdeckblechs (5) und der Bodenwand (2) angeordnet ist.

2. Führungseinheit nach Anspruch 1, **dadurch gekennzeichnet, dass** die Bodenwand (2) und die Seitenwand (3) des Profilträgers im Querschnitt einen Winkel von 90° miteinander bilden.

3. Führungseinheit nach Anspruch 1, **dadurch gekennzeichnet, dass** die Führungsschiene (7) an der Bodenwand (2) befestigt ist.

4. Führungseinheit nach Anspruch 1, **dadurch gekennzeichnet, dass** die Führungsschiene (7) an der Seitenwand (3) befestigt ist.

5. Führungseinheit nach Anspruch 1, **dadurch gekennzeichnet, dass** an dem Führungsgehäuse (1) innerhalb des Führungshohlraums (4) eine zu der Führungsschiene (7) parallele Zahnstange (8) befestigt ist, in welche ein mit einer Antriebswelle (12) versehenes Zahnritzel (13) eingreift, welches an einer von dem Läufer (9) und der Schlittenplatte (10) gebildeten Läuferbaugruppe drehbar gelagert ist.

6. Führungseinheit nach Anspruch 5, **dadurch gekennzeichnet, dass** das Zahnritzel (13) und die Antriebswelle (12) in einem an der Schlittenplatte (10) befestigten Lagerbock (14) drehbar gelagert sind.

7. Führungseinheit nach Anspruch 5, **dadurch gekennzeichnet, dass** an der Schlittenplatte (10) ein flexibles Zugmittel (16) angreift, welches über jeweils eine an den Längsenden des Führungsgehäuses (1) angeordnete und dort gelagerte Umlenkrolle (17) geführt ist, wobei eine Umlenkrolle (17) oder beide Umlenkrollen (17) jeweils mit einer koaxialen Abtriebswelle (19) fest verbunden sind.

8. Führungseinheit nach Anspruch 7, **dadurch gekennzeichnet, dass** die Umlenkrolle (17) jeweils in einem Umlenkgehäuse (18) gelagert ist.

9. Führungseinheit nach Anspruch 1, **dadurch gekennzeichnet, dass** an der Schlittenplatte (10) zwei Läufer (9, 20) befestigt sind, welche die Führungsschiene (7) teilweise umgeben und an dieser in Längsrichtung hintereinander angeordnet sind.

## Claims

1. Linear guide unit, with a guide housing (1) which is designed in the form of a profile girder with a bottom wall (2) and with a side wall (3), the walls (2, 3) delimiting a guide cavity (4) and forming with one another, in cross section, an angle which is smaller than 180°, and with a guide rail (7) which is fastened to the bottom wall (2) or to the side wall (3) and which is partially surrounded by at least one longitudinally displaceable runner (9) which is supported thereon and to which is fastened a slide plate (10) which projects through a longitudinal orifice (6) of the guide cavity (4) and which has a connecting face (11) for connection to a connecting component to be moved in the longitudinal direction of the guide housing (1), **characterized in that**, for further delimiting the guide cavity (4), a cover plate (5) is releasably fastened to the side wall (3) **in that** end region of the latter which faces away from the bottom wall (2), the longitudinal orifice (6) for the slide plate (10) being arranged between a free end region of the cover plate (5) and the bottom wall (2).

2. Guide unit according to Claim 1, **characterized in that** the bottom wall (2) and the side wall (3) of the profile girder form with one another, in cross section, an angle of 90°.

3. Guide unit according to Claim 1, **characterized in that** the guide rail (7) is fastened to the bottom wall (2).

4. Guide unit according to Claim 1, **characterized in that** the guide rail (7) is fastened to the side wall (3).

5. Guide unit according to Claim 1, **characterized in that** the guide housing (1) has fastened to it, within the guide cavity (4), a rack (8) which is parallel to the guide rail (7) and into which engages a pinion (13) which is provided with a drive shaft (12) and which is rotatably mounted on a runner subassembly formed by the runner (9) and by the slide plate (10).

6. Guide unit according to Claim 5, **characterized in that** the pinion (13) and the drive shaft (12) are rotatably mounted in a bearing block (14) fastened to the slide plate (10).

7. Guide unit according to Claim 5, **characterized in that** the slide plate (10) has engaging on it a flexible traction means (16) which is guided in each case via a deflecting roller (17) arranged at the longitudinal ends of the guide housing (1) and mounted there, one deflecting roller (17) or both deflecting rollers (17) being fixedly connected in each case to a coaxial output shaft (19).

8. Guide unit according to Claim 7, **characterized in that** the deflecting roller (17) is mounted in each case in a deflection housing (18).

9. Guide unit according to Claim 1, **characterized in that** the slide plate (10) has fastened to it two runners (9, 20) which partially surround the guide rail (7) and are arranged on the latter one behind the other in the longitudinal direction.

## Revendications

1. Dispositif de guide linéaire comprenant un boîtier de guidage (1) qui est réalisé sous forme d'un support profilé avec une paroi de fond (2) et une paroi latérale (3), les parois (2, 3) délimitant un espace creux de guidage (4) et formant conjointement, en section transversale, un angle qui est inférieur à 180°, et comprenant un rail de guidage (7) fixé sur la paroi de fond (2) ou sur la paroi latérale (3), lequel est partiellement entouré par au moins un curseur (9) supporté sur celui-ci et pouvant coulisser longitudinalement, sur lequel est fixée une plaque de chariot (10) dépassant par une ouverture longitudinale (6) de l'espace creux de guidage (4), laquelle plaque de chariot (10) présente une face de connexion (11) pour la connexion à un composant de connexion à déplacer dans la direction longitudinale du boîtier de guidage (1), **caractérisé en ce qu'**une tôle de recouvrement (5) est fixée de manière desserrable sur la paroi latérale (3) dans sa région d'extrémité opposée à la paroi de fond (2) en vue d'une délimitation supplémentaire de l'espace creux de guidage (4), l'ouverture longitudinale (6) pour la plaque de chariot (10) étant prévue entre une région d'extrémité libre de la tôle de recouvrement (5) et la paroi de fond (2).

2. Dispositif de guide selon la revendication 1, **caractérisé en ce que** la paroi de fond (2) et la paroi latérale (3) du support profilé forment ensemble en section transversale un angle de 90°.

3. Dispositif de guide selon la revendication 1, **caractérisé en ce que** le rail de guidage (7) est fixé sur la paroi de fond (2).

4. Dispositif de guide selon la revendication 1, **caractérisé en ce que** le rail de guidage (7) est fixé sur la paroi latérale (3).

5. Dispositif de guide selon la revendication 1, **caractérisé en ce que** l'on fixe sur le boîtier de guidage (1) à l'intérieur de l'espace creux de guidage (4) une crémaillère (8) parallèle au rail de guidage (7), dans laquelle vient en prise un pignon denté (13) pourvu d'un arbre d'entraînement (12), qui est monté à rotation sur un module de curseur formé par le curseur (9) et la plaque de chariot (10).

6. Dispositif de guide selon la revendication 5, **caractérisé en ce que** le pignon denté (13) et l'arbre d'entraînement (12) sont montés à rotation dans un coussinet (14) fixé sur la plaque de chariot (10).

7. Dispositif de guide selon la revendication 5, **caractérisé en ce qu'**un moyen de traction flexible (16) vient en prise sur la plaque de chariot (10), lequel est guidé par le biais d'une poulie de renvoi (17) disposée respectivement au niveau des extrémités longitudinales du boîtier de guidage (1) et montée à cet endroit, une poulie de renvoi (17) ou les deux poulies de renvoi (17) étant connectées fixement à chaque fois à un arbre de sortie coaxial (19).

8. Dispositif de guide selon la revendication 7, **caractérisé en ce que** la poulie de renvoi (17) est à chaque fois montée dans un boîtier de renvoi (18).

9. Dispositif de guide selon la revendication 1, **caractérisé en ce que** deux curseurs (9, 20) sont fixés sur la plaque de chariot (10), lesquels entourent partiellement le rail de guidage (7) et sont disposés sur celui-ci l'un derrière l'autre dans la direction longitudinale.
